# EUROPÄISCHE PATENTSCHRIFT

(11) **EP 0 810 962 B1**
(45) Veröffentlichungstag und Bekanntmachung des Hinweises auf die Patenterteilung: **11.11.1998**
(21) Anmeldenummer: 96902205.2
(22) Anmeldetag: 27.02.1996
(51) Int. Cl.: B65G 27/02, B65G 27/08, B65G 27/30

(54) **ANTRIEBSEINHEIT FÜR SCHWINGUNGSFÖRDERER**
DRIVING UNIT FOR VIBRATION CONVEYORS
UNITE D'ENTRAINEMENT POUR CONVOYEURS A VIBRATIONS

(30) Priorität: 28.02.1995 CH 565/95
(43) Veröffentlichungstag der Anmeldung: 10.12.1997
(73) Patentinhaber: Krämer AG Bassersdorf, 8303 Bassersdorf (CH)
(72) Erfinder: ILLI, Thomas, CH-8548 Ellikon an der Thur (CH)
(74) Vertreter: Felber, Josef
(86) Internationale Anmeldenummer: CH9600060
(87) Internationale Veröffentlichungsnummer: WO9626873

(56) Entgegenhaltungen:
- EP-A- 0 549 533
- CH-A- 480 248
- FR-A- 2 369 983
- GB-A- 2 086 003

## Beschreibung

Die vorliegende Erfindung betrifft eine Antriebseinheit für Schwingungsförderer, die in verschiedenen Ausführungen zum Fördern von Kleinteilen eingesetzt werden. Sie arbeiten nach dem Prinzip, dass eine spiral- oder kreisförmige Bahn in eine Vibration versetzt wird, deren Bewegung im wesentlichen eine horizontale sowie eine vertikale Komponente aufweist. Bei dem zu fördernden Gut kann es sich um Kleinteile aus verschiedensten Materialien handeln, die im Verlaufe eines Produktionsprozesses zum Beispiel sortiert, geprüft und in Gebinde abgefüllt werden müssen. Derartig angetriebene Sortiertöpfe versetzen die darin befindlichen Kleinteile in eine Umlaufbewegung längs des Randes des Sortiertopfes, wobei nur Kleinteilchen, die sich in einer bestimmten Lage befinden, eine entsprechende Sortierpassage überwinden können, während die anderen zurück in den Sortiertopf fallen. Eine andere spezielle Ausführung eines Schwingungsförderers dient zum gleichzeitigen Entgraten und Entstauben von Komprimaten der pharmazeutischen Industrie wie etwa Tabletten oder Pillen. Aus der EP 0'549'533 Al ist ein solcher Tablettenentgrater bekannt, der im Produktionsprozess der Tabletten unmittelbar den Tablettenpressen nachgeschaltet wird. Er fördert die Tabletten hoch und entgratet und entstaubt sie dabei gleichzeitig. Dieser Tablettenentgrater weist eine schraubenlinienförmige Bahn auf, welche längs der Innenwand eines stehenden Mantelrohres verläuft und in eine Vibration mit horizontaler und vertikaler Komponente versetzt werden kann. Infolge dieser Vibration hüpfen die Tabletten auf der schraubenlinienförmigen Bahn aufwärts. Mittels einer Absaugvorrichtung kann der Staub aus dem Bereich über der schraubenlinienförmigen Bahn abgesaugt werden. Die Vibration wird dabei von einem auf einem Sockel montierten Elektromagneten erzeugt, mittels dessen eine vom Sockel beabstandete magnetische Schwingplatte, mit welcher die schraubenlinienförmige Bahn mittelbar fest verbunden ist, gegen die Rückstellkraft von schief zur Wickelachse des Elektromagneten zwischen dem Sockel und der Schwingplatte angeordneter Blattfedern anziehbar ist.

Ein Nachteil des Antriebs dieses Schwingungsförderers und Tablettenentgraters besteht nun darin, dass der Sockel der ganzen Vorrichtung die Gegenschwingmasse bildet, somit zwangsläufig in Vibration versetzt wird und diese Vibration von Gummifüssen absorbiert werden muss. Das gleiche trifft auch zu für einen Sortiertopf, welcher in dieser Weise angetrieben wird. Weil solche Schwingungsförderer im Betrieb kein ruhendes Teil aufweisen, schwingt auch das ganze Gehäuse, der Ständer, der Sockel und überhaupt jedes Teil an ihnen mit. Die aufgenommene Energie wird daher nicht nur in Schwingung derjenigen Teile umgewandelt, die tatsächlich auch schwingen sollen, sondern es werden unweigerlich auch Zusatz-Einrichtungen in Schwingung versetzt, die eigentlich gar nicht schwingen müssten, was der Effizienz des Schwingungsförderers abträglich ist. Weil der Sockel unausweichlich als Gegenschwingmasse wirkt, muss er relativ schwer ausgebildet sein, um den Schwingungsförderer sicher zu tragen, wobei die Gummifüsse seine Schwingung so absorbieren müssen, dass schliesslich der ganze Schwingungsförderer im Betrieb stationär auf dem Boden steht.

Weiterhin sind Antriebe für Schwingungsförderer durch die FR-A-2 369 983, CH-A-480 248 und die GB-A-2 086 003 bekanntgeworden.

Es ist die Aufgabe der vorliegenden Erfindung, ausgehend vom gattungsgemäßen Stand der Technik nach der EP-A-0 549 533, eine Antriebeseinheit für einen Schwingungsförderer zum Fördern von Kleinteilen zu schaffen, bei der die aufgenommene Energie effizienter als bei herkömmlichen Konstruktionen umgesetzt wird, indem weniger Masse in Schwingung versetzt wird und gleichzeitig ruhende Teile am Schwingungsförderer geschaffen werden, welche beliebige Zusatz-Einrichtungen tragen können, die nicht mitschwingen müssen oder sollen.

Diese Aufgabe wird gelöst von einer Antriebseinheit zum Fördern von Kleinteilen gemäss dem Oberbegriff des Patentanspruches 1, die sich durch die kennzeichnenden Merkmale eben dieses Patentanspruches 1 auszeichnet.

Eine solche Antriebseinheit ist im Vergleich zu herkömmlichen Konstruktionen kompakter und nimmt zur Erzielung der gleichen Wirkung nur etwa halb so viel elektrische Energie auf wie die herkömmliche Antriebseinheit in der Konstruktion gemäss EP 0'549'533 Al. Die Sockelkonstruktion, auf welcher sie steht, ist keiner Vibration mehr ausgesetzt und ebenfalls können Zusatzeinrichtungen an ihr montiert werden, die auch im Betrieb absolut ruhig bleiben und also nicht mitschwingen. Eine solche Antriebseinheit ermöglicht es im Vergleich zu einer herkömmlichen Konstruktion, mit dem gleichen Energieaufwand eine grössere Förderhöhe zu realisieren.

Eine vorteilhafte Ausführung der erfindungsgemässen Antriebseinheit ist in den Figuren gezeigt, anhand welcher sie in der nachfolgenden Beschreibung im einzelnen erläutert wird.

Es zeigt:
- Figur 1:: Die Antriebseinheit integriert in einen Tablettenentgrater, welcher in einem Querschnitt von der Seite her gesehen dargestellt ist;
- Figur 2:: Die Antriebseinheit des Schwingungsförderers im Detail.

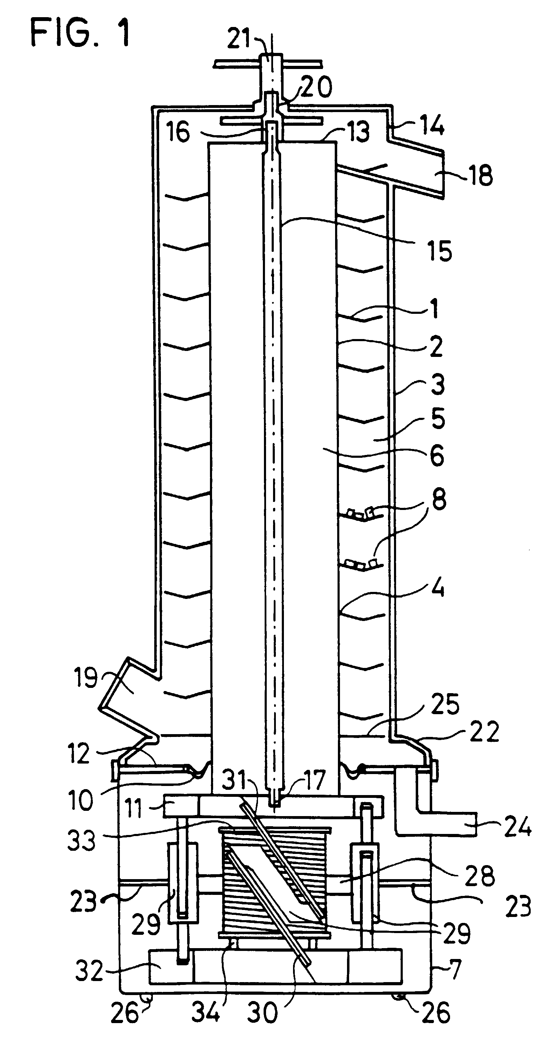

In Figur 1 ist die erfindungsgemässe Antriebseinheit in Anwendung an einem Schwingungsförderer dargestellt. Sie befindet sich hier im Innern des Gehäuses einer Sockelkonstruktion 7 und besteht aus einem Elektromagneten 33 und vier peripher um ihn herum verteilten, schiefwinklig zur Elektromagnet-Wickelachse angeordneten Trägerbalken 29, die je oben und unten ein Federpaket 30,31 tragen. Die oberen Federpakete 31 sind oberhalb des Elektromagneten 33 mit ihrem oberen Ende mit einer Schwingplatte 11 fest verbunden, während die unteren Federpakete 30 unterhalb des Elektromagneten 33 mit einer Gegenschwingplatte 32 fest verbunden sind. Der Elektromagnet 33 ist freistehend an der Gegenschwingplatte 32 befestigt. Die Trägerbalken 29 bilden im Betrieb ruhende Pole und sind als solche fest mit der Sockelkonstruktion 7 verbunden, welche die ganze Antriebseinheit und auch die anzutreibende Förderbahn trägt. Der hier gezeigte Schwingungsförderer ist gleichzeitig als Tablettenentgrater ausgebildet. Die Kleinteile, hier also die Tabletten, werden auf der schraubenlinienförmigen, kännelartigen Bahn 1, welche sich mit ihrem inneren Rand 4 längs der Aussenseite eines Trägerrohrs 2 um dieses windet, infolge der von der Antriebseinheit erzeugten Schwingungen emporgefördert. Die Bahn 1 besteht vorteilhaft aus Chromstahl und bildet eine Rinne, indem sie in der Mitte im Querschitt einen Knick aufweist. Durch diese Massnahme wird sichergestellt, dass insbesondere in dem Fall, wo es sich bei den zu fördernden Kleinteilen um Tabletten handelt, diese in einer liegenden Lage befördert werden. Selbst wenn einzelne Tabletten infolge der Vibrationen zuweilen in eine aufrechte Lage springen, so gelangen sie wegen dieser Rinnenform innert kurzer Zeit wieder in eine liegende Lage. Ausserdem wird durch diesen Knick sichergestellt, dass die Tabletten auf der Bahn niemals verklemmen. Ueber das Trägerrohr 2 und die auf seiner Aussenseite sich aufwärts windende Bahn 1 ist mit wenig radialem Abstand ein Mantelrohr 3 gestülpt, welches vorteilhaft aus Plexiglas besteht und so Einblick auf die Bahn 1 gewährt. Auf das obere Ende des Mantelrohres 3 ist ein Deckel 14 gestülpt, welcher dort, wo die Bahn 1 endet, eine Ausschüttgosse 18 aufweist. Unten, am Anfang der Bahn 1, befindet sich andrerseits eine Einschüttgosse 19 am Mantelrohr 3. Das Trägerrohr 2 ist nun auf der zur Antriebseinheit gehörigen Schwingplatte 11 aufgebaut, denn es soll mitsamt der kännelartigen Bahn 1 schwingen. Längs der Achse des zentralen Trägerrohres 2 verläuft ein Rundstab 15 mit endseitigen Gewinden 16,17. Der Rundstab 15 ist unten mittels des Gewindes 17 fest mit der Schwingplatte 11 der Antriebseinheit verschraubt. Auf das Trägerrohr 2 ist ein Deckel 13 aufgesetzt, der mittels eines Schraubverschlusses 20 das Trägerrohr 2 über den Rundstab 15 mit der Schwingplatte 11 verspannt. Das Mantelrohr 3 ist wie schon beschrieben mit einem Deckel 14 abgeschlossen und steht auf dem Gehäuse der Sockelkonstruktion 7. Den oberen Abschluss des Gehäuses bildet ein ringförmiges Abdeckblech 12. Zwischen dem Abdeckblech 12 und dem Trägerrohr 2 sorgt eine Lippendichtung 10 für eine elastische, staub- und luftdichte Verbindung zwischen dem vibrierenden Trägerrohr 2 und dem ruhenden Abdeckblech 12. Der Staub zwischen dem Trägerrohr 2 und dem Mantelrohr 3, welcher infolge der aneinander reibenden Tabletten 8 in diesem Bereich 5 entsteht, kann fortlaufend nach unten über den Stutzen 24 abgesaugt werden. Die Schwingplatte 11, welche das Trägerrohr 2 und die schraubenlinienförmige Bahn 1 trägt, ist auf vier Paaren von Blattfeder-Paketen 30,31 gelagert. Das wesentliche an der Antriebseinheit ist die Anordnung der Blattfeder-Pakete 30,31. Es ist nämlich diese spezielle Anordnung, die sicherstellt, dass weder die Sockelkonstruktion 7 noch das von ihr getragene Mantelrohr 3 in Schwingung versetzt werden und somit keinen Vibrationen ausgesetzt sind. Die Sockelkonstruktion 7 ist hier von einem runden, behälterähnlichen Metallkasten gebildet, an dessen Unterseite Gummifüsse 26 angebracht sind. Etwa auf halber Höhe des Metallkastens verläuft ein horizontal liegender Metallring 28, den man hier von der Seite her sieht und der den Elektromagneten 33 mit einem radialen Abstand umschlingt. Um seinen äusseren Umfang verteilt sind die vier Trägerbalken 29 schiefwinklig zu seiner Ebene befestigt, etwa in einem 35°-Winkel zur Metallringebene. Hierzu sind aus dem äusseren Randbereich des Ringes 28 Ausfräsungen ausgenommen, in welche die Trägerbalken 29 eingelegt und darin festgeschraubt sind. Diese Trägerbalken 29 sind über radial nach aussen verlaufende Bolzen 23 fest mit der Sockelkonstruktion 7 verbunden. Der dem Betrachter von Figur 1 am nächsten liegende Trägerbalken 29 ist von der Seite her zu sehen. Parallel zu seiner Oberseite und parallel zu seiner Unterseite verläuft je ein Blattfeder-Paket 30,31. Das obere Blattfeder-Paket 31 ist mit seinem unteren Ende fest an der Oberseite des Trägerbalkens 29 angeschraubt, während sein frei schwingendes oberes Ende an der Schwingplatte 11 befestigt ist. In genau gleicher Weise sind die anderen drei oberen Blattfeder-Pakete angeordnet. Das untere Blattfeder-Paket 30 ist hingegen mit seinem oberen Ende fest am Trägerbalken 29 befestigt und sein frei schwingendes unteres Ende ist mit einer Gegenschwingplatte 32 fest verbunden. Die anderen drei unteren Blattfeder-Pakete 30 sind ebenfalls in der gleichen Art angeordnet. Auf der Gegenschwingplatte 32 sitzt der Elektromagnet 33, welcher mittels Gewindebolzen 34 auf der Gegenschwingplatte 32 befestigt ist und somit in seiner Höhenlage verstellbar ist. Der Elektromagnet 33 nimmt somit den Raum im Innern des Ringes 28 ein, wobei seine Wickelachse mit der zentralen Achse der ganzen Fördereinrichtung zusammenfällt, längs welcher auch der Rundstab 15 verläuft. Auf der Schwingplatte 11 steht das Trägerrohr 2 mit der schraubenlinienförmigen Bahn 1 und auf dem oberen Rand des Metallkastens bzw. der Sockelkonstruktion 7 ruht das Mantelrohr 3. Die eine, obere Schwingmasse wird deshalb gebildet von der Schwingplatte 11, dem Trägerrohr 2 sowie der schraubenlinienförmigen Bahn 1, und die andere, untere Schwingmasse, die hier als Gegenschwingmasse wirkt, wird gebildet von der Gegenschwingplatte 32 und dem darauf befestigten Elektromagneten 33. Die obere und die untere Schwingmasse sind über die Blattfeder-Pakete 30,31 und die am Ring 28 angeordneten Trägerbalken 29 miteinander verbunden, wobei die Trägerbalken im Betrieb ruhig bleiben und also nicht in Schwingung versetzt werden. Somit bleibt auch die Sockelkonstruktion 7 und das darauf ruhende Mantelrohr 3 ruhig und diese Teile sind daher keiner Vibration ausgesetzt.

Wenn nun der Elektromagnet 33 mittels magnetischer Kraft die Schwingplatte 11 gegen sich zieht, so werden die Blattfeder-Pakete 30,31 gegen ihre Federkraft leicht gekrümmt, was gleichzeitig eine leichte Drehung der Schwingplatte 11 bewirkt. Im gezeigten Beispiel, wenn von oben auf die Schwingplatte 11 gesehen wird, erfolgt diese Drehung beim Herunterziehen der Schwingplatte 11 im Uhrzeigersinn. Wenn der Elektromagnet 33 ausgeschaltet wird, schnellt die Schwingplatte 11 kraft der Blattfedern 30,31 in genau umgekehrter Bewegungsrichtung zurück. Die Gegenschwingplatte 32 macht genau die gegengleiche Bewegung. Die beschriebene Bewegung der Schwingplatte 11 wird auf das Trägerrohr 2 und die schraubenlinienförmige Bahn 1 übertragen, wobei eine Bewegung von zum Beispiel etwa 4 mm Amplitude resultiert, die wegen der Drehung eine horizontale und wegen der Auf- und Abbewegung der Schwingplatte 11 eine vertikale Komponente aufweist. Im Betrieb gelangen die Kleinteile 8 durch die Einschüttgosse 19 ganz unten auf die Bahn 1. Auf der schraubenlinienförmigen Bahn 1 werden sie durch jeden Bewegungszyklus bezüglich der Bahn schräg nach vorwärts und oben geworfen und landen schliesslich weiter vorgerückt auf der Bahn 1. Die für den Betrieb der Vorrichtung gewählte Frequenz und Amplitude der Vibration hängt selbstverständlich von der Eigenfrequenz der ganzen Anordnung ab und kann mittels einer Steuerung des Elektromagneten 33 reguliert werden. Eine typische Frequenz liegt in der Grössenordnung von etwa 40 bis 60 Hz. Letztlich wird also mittels dieser Vorrichtung bewirkt, dass die Kleinteile 8 längs der schraubenlinienförmigen Bahn 1 hochgefördert werden. Da die Kleinteile über einen grösseren Zeitraum ordentlich durchvibriert werden, kann die dabei erlittene mechanische Beanspruchung zum Beispiel zum Entgraten von Tabletten genutzt werden. Die abgearbeiteten Grate werden in Form von Staub vom Bereich 5 aus fortlaufend abgesaugt, sodass die Tabletten 8 schliesslich, nach einer hüpfenden Wanderung über die gesamte Bahnlänge, an der oberen Ausschüttgosse 18 der Vorrichtung fertig entgratet und entstaubt ausgegeben werden. Während des ganzen Entgratens und Entstaubens wurde keine Förderhöhe verloren, sondern im Gegenteil Förderhöhe gewonnen, indem die Tabletten 8 auf der schraubenlinienförmigen Bahn 1 infolge der typischen Vibration aufwärts bewegt werden. Die schraubenlinienförmige Bahn 1 kann sich bei einer derartigen Vorrichtung wie gezeigt über viele Windungen und dadurch über mehrere Meter erstrecken und eine entsprechend hohe Verweilzeit und daher Bearbeitungszeit der einzelnen Tabletten sicherstellen. Die Fördergeschwindigkeit erlaubt es dabei, mehrere 100'000 Kleinteile pro Stunde zu befördern und dabei wahlweise auch zu entgraten und zu entstauben. Auch die eigentliche Förderhöhe kann dabei mehrere Meter betragen.

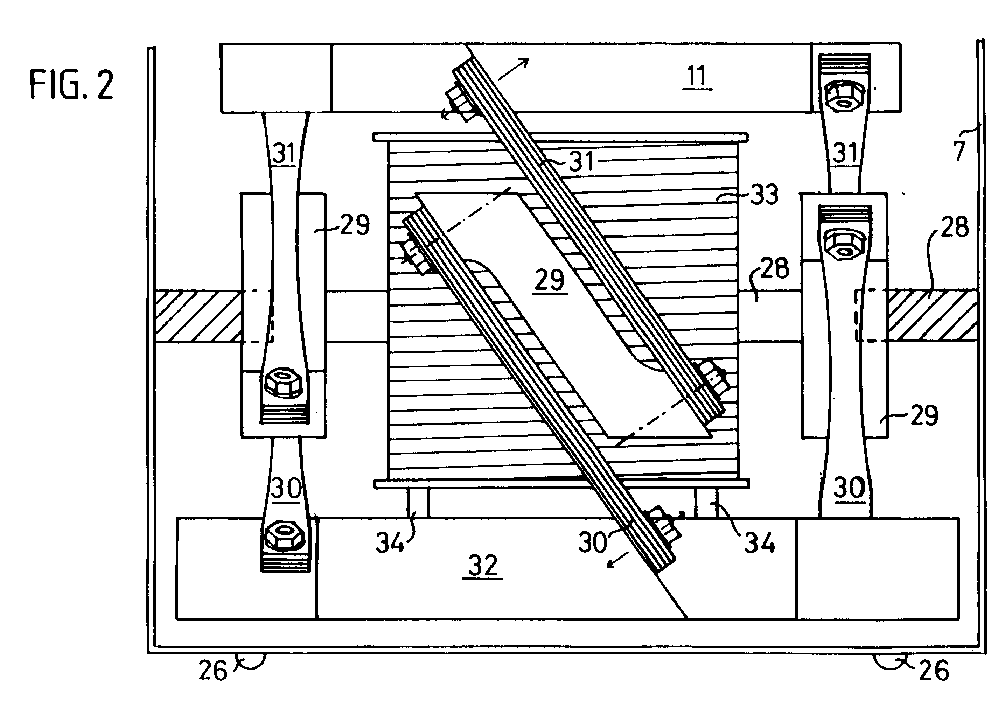

Figur 2 zeigt eine altemative Ausführung der Antriebseinheit in vergrösserter Darstellung. Man sieht oben die Schwingplatte 11, auf der das hier nicht eingezeichnete Trägerrohr und die schraubenlinienförmige Bahn fest montiert sind, und unten die Gegenschwingplatte 32. Die ganze Konstruktion ist im Gehäuse einer Sockelkonstruktion 7 untergebracht, die auf Gummifüssen 26 steht. Auf etwa halber Höhe des Sockelgehäuses 7 ist innen ein Ring 28 angeordnet, der horizontal liegend ausserhalb der Trägerbalken 29 rundum längs des Sockelgehäuses 7 verläuft. In der Zeichnung sieht man diesen Ring 28 im Querschnitt dargestellt. Die vier Trägerbalken 29 sind in Ausnehmungen in diesem Ring 28 eingelegt, die im Gegensatz zur Ausführung in Figur 1 aus dem inneren statt dem äusseren Randbereich herausgefräst sind. Zum besseren Verständnis ist auch der in der Zeichnung dem Betrachter am nächsten liegende Trägerbalken 29 mit seinen beiden Blattfeder-Paketen 30,31 dargestellt, obwohl der vordere Halbkreis des Ringes 28 nicht eingezeichnet ist. Anstelle eines längs des Gehäuses umlaufenden Ringes können aber auch vier am Gehäuse festgeschraubte Bolzen dienen, welche je einen Trägerbalken in der gewünschten Position fest mit der Sockelkonstruktion 7 verbinden. In einer Variante kann anstelle von vier Trägerbalken mit je zwei Blattfeder-Paketen kann auch eine Ausführung mit bloss drei verteilt um den Umfang angeordneter Trägerbalken und Blattfeder-Paketen gewählt werden. Die einzelnen Blattfeder-Pakete bestehen aus einer Mehrzahl von Blattfedern der gezeigten Form. Sie weisen an ihren beiden Enden ein Montageloch auf und sind gegen die Längsmitte hin verjüngt. Diese Verjüngung erweist sich vorteilhaft, weil sich so eine Biegelinie ergibt, welche das Federmaterial überall etwa einer gleichen Beanspruchung aussetzt. Versuche haben gezeigt, dass Blattfedern mit gleichmässiger Stärke nach relativ kurzer Einsatzzeit nahe der Montagelöcher infolge Ermüdung brechen. Diese Brüche erfolgen deshalb, weil die Federn sowohl eine Verwindung wie auch eine Verbiegung erleiden. Weil sich die Verwindung bei einer gleichmässig starken Feder auch gleichmässig über die ganze Federlänge verteilt, kommt es unweigerlich an schwächsten Stelle, nämlich nahe des Montageloches, zum Bruch, weil die Feder hier zudem in einen stationären Bereich übergeht. Mit den Federn der hier gezeigten Form wurden keine Ermüdungbrüche mehr festgestellt. Das Mass der Verwindung oder Torsion ist wegen der Verjüngung in der Längsmitte am grössten und nimmt gegen die Federenden hin ab, sodass diese in der Nähe der Montagelöcher nicht mehr so stark beansprucht sind. Zur Schonung der einzelnen Federn eines Federpaketes werden diese mit Distanzscheiben mit ca. 0.5mm voneinander beabstandet. Dadurch wird ein Scheuern der einzelnen Federn aneinander vermieden. Inmitten des Ringes 28 steht der Elektromagnet 33, der über vier Gewindebolzen 34 mit der Gegenschwingplatte 32 verbunden ist. Mittels Drehen dieser Gewindebolzen 34 lässt sich die Höhenlage des Elektromagneten 33 verstellen. An dieser Anordnung bleiben nun das Sockelgehäuse 7, der Ring 28 und die vier Trägerbalken 29 stets ruhig und vibrieren auch im Betrieb nicht.

Die vorliegende Antriebseinheit für Schwingungsförderer, die sowohl zum blossen Befördern oder Sortieren von Kleinteilen eingesetzt werden können wie auch zum wahlweisen Entgraten und Entstauben von Tabletten, setzt die eingesetzte elektrische Energie in bisher unerreichter Effizienz in Förderleistung um. Nur noch diejenigen Massen werden zum Schwingen gebracht, die tatsächlich auch schwingen müssen. Erstmals werden ruhende Pole an einer solchen Antriebseinheit realisiert, sodass die übrigen mit der Antriebseinzeit verbundenen Komponenten absolut stationär sind und keiner Vibration ausgesetzt sind.

## Patentansprüche

1. Antriebseinheit für einen Schwingungsförderer, bestehend aus einem Elektromagneten (33), auf dessen oberer Seite eine Schwingplatte (11) angeordnet ist, mit der die in Schwingung zu versetzenden Teile (1,2) des Schwingungsförderers fest verbunden sind, und einer auf der gegenüberliegenden Seite des Elektromagneten (33) angeordneten, hängenden Gegenschwingplatte (32), auf welcher der Elektromagnet höhenverstellbar befestigt ist, wobei die Schwingplatte (11) und die Gegenschwingplatte (32) federnd miteinander verbunden sind, dadurch gekennzeichnet, dass diese federnde Verbindung durch mindestens drei gleichmässig verteilt um den Wicklungsumfang des Elektromagneten (33) angeordnete, schiefwinklig zur Wickelachse des Elektromagneten (33) angeordnete Trägerbalken (29) realisiert ist, deren Oberseite je über ein gegen oben ragendes Blattfederpaket (31) mit der Schwingplatte (11) verbunden ist und deren Unterseite je über ein weiteres, nach unten ragendes Blattfederpaket (30) mit der hängenden Gegenschwingplatte (32) verbunden ist, und dass die Trägerbalken (29) fest mit einer stationären Sockelkonstruktion (7) verbunden sind und diese Verbindung die einzige Verbindung der Antriebseinheit zu den nichtschwingenden Teilen des Schwingungsförderers ausmacht, so dass bei Anlegen einer Wechselspannung an den Elektromagneten (33) die Schwingplatte (11) und die mit ihr verbundenen Teile (1,2) einerseits und der Elektromagnet (33) und die Gegenschwingplatte (32) andrerseits in Schwingung versetzt werden.

2. Antriebseinheit nach Anspruch 1, dadurch gekennzeichnet, dass die federnde Verbindung durch vier gleichmässig verteilt um den Wicklungsumfang des Elektromagneten (33) angeordnete, schiefwinklig zur Wickelachse des Elektromagneten (33) angeordnete Trägerbalken (29) realisiert ist.

3. Antriebseinheit nach einem der vorhergehenden Ansprüche, dadurch gekennzeichnet. dass die einzige Verbindung der Antriebseinheit zu den nichtschwingenden Teilen des Schwingungsförderers aus Bolzen (23) besteht, die aussen an den Trägerbalken (29) befestigt sind und in bezug auf Elektromagneten (33) in radialer Richtung nach aussen zur Sockelkonstruktion (7) hinführen und dort fest mit ihr verbunden sind.

4. Antriebseinheit nach Anspruch 3, dadurch gekennzeichnet, dass die einzelnen Trägerbalken (29) auf ihrer inneren, dem Elektromagneten (33) zugewandten Seite mit einem um den Elektromagneten (33) herum verlaufenden Ring (28) fest verbunden sind.

5. Antriebseinheit nach einem der Ansprüche 1 bis 2, dadurch gekennzeichnet, dass die einzige Verbindung der Antriebseinheit zu den nichtschwingenden Teilen des Schwingungsförderers aus einem Ring (28) besteht, der aussen um die Trägerbalken (29) und den Elektromagneten (33) herumführt und an dem die Trägerbalken (29) befestigt sind, wobei der Ring (28) mit seiner Aussenseite fest mit der Sockelkonstruktion (7) verbunden ist.

6. Antriebseinheit nach einem Ansprüche 4 oder 5, dadurch gekennzeichnet, dass aus dem ausserhalb oder innerhalb der Trägerbalken verlaufenden Ring (28) schiefwinklig zur Ringebene verlaufende Ausnehmungen ausgefräst sind, in welche die Trägerbalken (29) einpassen und in welchen sie festgeschraubt sind.

7. Antriebseinheit nach einem der vorhergehenden Ansprüche, dadurch gekennzeichnet, dass die einzelnen Federn der Federpakete (30,31) aus mehreren, mittels Distanzringen voneinander beabstandeten Blattfedern bestehen, die gegen ihre Längsmitte hin stetig verjüngt sind und an ihren beiden Enden je ein Montageloch aufweisen.

8. Antriebseinheit nach einem der vorhergehenden Ansprüche, dadurch gekennzeichnet, dass auf ihrer Schwingplatte (11) ein Trägerrohr (2) steht, welches fest mit der Schwingplatte (11) verspannt ist und um welches eine schraubenlinienförmige, kännelartige Bahn (1) verläuft, und dass über diese Bahn (1) mit wenig radialem Abstand ein Mantelrohr (3) mit Einschüttgosse (19) am unteren Ende und Ausschüttgosse (18) am oberen Ende gestülpt ist, wobei das Mantelrohr (3) ausschliesslich mit der stationären Sockelkonstruktion (7) fest verbunden ist und somit nicht mitschwingt, und dass eine Absaugvorrichtung vorhanden ist, mittels welcher Staub aus dem Bereich (5) zwischen dem Trägerrohr (2) und dem Mantelrohr (3) absaugbar ist.

9. Antriebseinheit nach einem der vorhergehenden Ansprüche, dadurch gekennzeichnet, dass der Elektromagnet (33) mittels Gewindebolzen (34) beabstandet mit der GegenSchwingplatte (32) verbunden ist, sodass er auf der Gegenschwingplatte (32) in seiner Höhenlage verstellbar ist.

10. Antriebseinheit nach einem der Ansprüche 1 bis 7, dadurch gekennzeichnet, dass die Schwingplatte (11) fest mit einem Sortiertopf verbunden ist.

## Claims

1. Drive unit for a vibration conveyor consisting of an electromagnet (33) on the top side of which there is a vibration plate (11) to which the parts (1,2) of the vibration conveyor to be vibrated are rigidly secured, and a suspended complementary vibration plate (32) disposed on the opposite side of the electromagnet (33) to which the electromagnet is vertically adjustably secured, with vibration plate (11) and complementary vibration plate (32) being elastically connected to each other, characterized in that this elastic connection is ensured by at least three supporting beams (29) positioned at regular intervals around the circumference of the winding of the electromagnet (33) at an oblique angle to the winding axis of the electromagnet (33), each of whose top end is connected to the vibration plate (11) by an upwardly projecting leaf spring set (31) and each of whose bottom end is connected to the suspended complementary vibration plate (32) by another downwardly projecting leaf spring set (30), and in that the supporting beams (29) are rigidly secured to a stationary base (7), this connection being the only connection between the drive unit and the non-vibrating parts of the vibration conveyor such that when alternating voltage is applied to the electromagnet (33), the vibration plate (11) and the parts (1,2) connected to it on the one hand, and the electromagnet (33) and the complementary vibration plate (32) on the other, are made to vibrate.

2. The drive unit of claim 1, characterized in that the elastic connection is ensured by four supporting beams (29) positioned at regular intervals around the circumference of the winding of the electromagnet (33) at an oblique angle to the winding axis of the electromagnet (33).

3. The drive unit of one of the preceding claims, characterized in that the only connection between the drive unit and the non-vibrating parts of the vibration conveyor is realized by means of bolts (23) which are secured to the outside of the supporting beams (29) and proceed outwards in a radial direction relative to the electromagnet (33) towards the base (7) where they are firmly secured to the latter.

4. The drive unit of claim 3, characterized in that the insides of the individual supporting beams (29) nearest to the electromagnet (33) are rigidly connected to a ring (28) that runs round the electromagnet (33).

5. The drive unit of one of claims 1 to 2, characterized in that the only connection between the drive unit and the non-vibrating parts of the vibration conveyor consists of a ring (28) which runs round the outside of the supporting beams (29) and the electromagnet (33), to which the supporting beams (29) are attached, with the outside of the ring (28) being securely connected to the base (7).

6. The drive unit of one of claims 4 or 5, characterized in that recesses running obliquely to the plane of the ring are cut into the ring (28) that runs round the outside or the inside of the supporting beams, into which the supporting beams (29) fit and in which they are securely screwed in place.

7. The drive unit of one of the preceding claims, characterized in that the individual springs of the spring sets (30,31) consist of several leaf springs set apart by means of spacer rings, which are continually tapered towards their longitudinal centre and have an assembly hole at each end.

8. The drive unit of one of the preceding claims, characterized in that standing on its vibration plate (11) there is a support pipe (2) which is rigidly tensioned with the vibration plate (11) and around which runs a helical, channel-like track (1), and in that a jacket pipe (3) with a feed chute (19) at the bottom and a discharge chute (18) at the top is fitted over this track (1) at a minimal radial distance, with the jacket pipe (3) being exclusively and rigidly connected with the stationary base (7) and hence does not vibrate, and in that there is a vacuum device for sucking away dust from the area (5) between the support pipe (2) and the jacket pipe (3).

9. The drive unit of one of the preceding claims, characterized in that the electromagnet (33) is connected at a distance to the complementary vibration plate (32) by means of threaded bolts (34) so that it can be vertically adjusted on the complementary vibration plate (32).

10. The drive unit of one of claims 1 to 7, characterized in that the vibration plate (11) is rigidly connected to a sorting pot.

## Revendications

1. Unité d'entraînement pour un convoyeur à secousses, composée d'un électro-aimant (33), sur la face supérieure duquel est disposée une plaque à secousses (11), à laquelle sont fixés les éléments (1, 2) à secouer du convoyeur à secousses, ainsi que d'une plaque antagoniste à secousses (32) suspendue et disposée sur le côté opposé de l'électro-aimant (33), sur laquelle l'électro-aimant est fixé de manière réglable en hauteur, la plaque à secousses (11) et la plaque antagoniste à secousses (32) étant reliées élastiquement ensemble, caractérisée en ce que cette liaison élastique est réalisée par au moins trois poutres porteuses (29), réparties régulièrement autour du pourtour de l'enroulement de l'électro-aimant (33) et inclinées par rapport à l'axe d'enroulement de cet électro-aimant (33), la face supérieure de ces poutres étant reliées chaque fois à la plaque à secousses (11) par un empilement de ressorts à lames (31) dépassant vers le haut, cependant que leur face inférieure est reliée chaque fois par un autre empilement de ressorts à lames (30) dépassant vers le bas à la plaque antagoniste suspendue à secousses (32) et que les poutres porteuses (29) sont fixées à un bâti inférieur stationnaire (7), cette liaison constituant la seule liaison de l'unité d'entraînement avec les éléments non soumis à des secousses du convoyeur à secousses, de sorte qu'à l'application d'une tension alternative à l'électro-aimant (33), la plaque à secousses (11) et les éléments (1, 2) qui lui sont liés, d'une part, ainsi que l'électro-aimant (33) et la plaque antagoniste à secousses (32), d'autre part, sont soumis à des secousses.

2. Unité d'entraînement suivant la revendication 1, caractérisée en ce que la liaison élastique est réalisée par quatre poutres porteuses (29), réparties régulièrement autour du pourtour de l'enroulement de l'électro-aimant (33) et inclinées par rapport à l'axe d'enroulement de cet électro-aimant (33).

3. Unité d'entraînement suivant une des revendications précédentes, caractérisée en ce que la seule liaison de l'unité d'entraînement avec les éléments - non soumis à des secousses - du convoyeur à secousses est constituée par des boulons (23), qui sont fixés extérieurement sur les poutres porteuses (29) et dirigés par rapport à l'électro-aimant (33) radialement vers l'extérieur, en direction du bâti inférieur (7), auquel ils sont fixés.

4. Unité d'entraînement suivant la revendication 3, caractérisée en ce que les différentes poutres porteuses (29) sont fixées sur leur face intérieure dirigée vers l'électro-aimant (33) à un anneau (28) entourant cet électro-aimant.

5. Unité d'entraînement suivant une des revendications 1 à 2, caractérisée en ce que l'unique liaison de l'unité d'entraînement avec les éléments - non soumis à des secousses - du convoyeur à secousses est constituée par un anneau (28), entourant extérieurement les poutres porteuses (29) et l'électro-aimant (33) et auquel sont fixées les poutres porteuses (29), l'anneau (28) étant fixé par sa face extérieure au bâti inférieur (7).

6. Unité d'entraînement suivant une des revendications 4 et 5, caractérisée en ce que sur l'anneau (28) disposé à l'extérieur ou à l'intérieur des poutres porteuses il est pratiqué des évidements inclinés par rapport au plan de l'anneau et dans lesquels les poutres porteuses (29) s'ajustent et se fixent.

7. Unité d'entraînement suivant une des revendications précédentes, caractérisée en ce que les différents ressorts des empilements de ressorts (30, 31) sont constitués par plusieurs ressorts à lames, maintenus à une certaine distance les uns des autres par des bagues entretoises, ces ressorts s'amincissant continuellement vers le milieu de leur longueur et comportant à chacune de leurs extrémités un trou de montage.

8. Unité d'entraînement suivant une des revendications précédentes, caractérisée en ce que sur sa plaque à secousses (11) il est disposé un tube porteur vertical (2), serré fixement sur cette plaque (11), autour duquel se déroule une piste (1) hélicoïdale en forme de goulotte et que cette piste (1) est enveloppée, avec une faible distance radiale, une chemise cylindrique (3), comportant une tubulure d'alimentation (19) à l'extrémité inférieure et une tubulure d'évacuation (18) à l'extrémité supérieure, la chemise cylindrique (3) étant fixée exclusivement au bâti inférieur stationnaire (7), de sorte qu'elle ne participe pas aux secousses, et qu'il existe un dispositif d'aspiration, permettant d'aspirer la poussière dans la zone (5), comprise entre le tube porteur (2) et la chemise cylindrique (3).

9. Unité d'entraînement suivant une des revendications précédentes, caractérisée en ce que l'électro-aimant (33) est fixé à la plaque antagoniste à secousses (32) au moyen de boulons filetés d'espacement (34), de sorte qu'il est réglable en hauteur sur la plaque antagoniste à secousses (32).

10. Unité d'entraînement suivant une des revendications 1 à 7, caractérisée en ce que la plaque à secousses (11) est fixée à un pot de triage.
